# EUROPÄISCHE PATENTSCHRIFT

(11) **EP 1 867 516 B1**
(45) Veröffentlichungstag und Bekanntmachung des Hinweises auf die Patenterteilung: **19.08.2009**
(21) Anmeldenummer: 07011578.7
(22) Anmeldetag: 13.06.2007
(51) Int. Cl.: B60K 31/00, B60K 31/02, B60W 30/14

(54) **Kraftfahrzeug**
Motor vehicle
Véhicule automobile

(30) Priorität: 14.06.2006 DE 102006027554
(43) Veröffentlichungstag der Anmeldung: 19.12.2007
(73) Patentinhaber: AUDI AG, 85045 Ingolstadt (DE)
(72) Erfinder: Limbacher, Reimund, 85055 Ingolstadt (DE)
(74) Vertreter: Thielmann, Frank

(56) Entgegenhaltungen:
- EP-A- 0 930 192
- DE-A1- 4 338 098
- DE-A1- 10 064 307
- DE-A1- 10 219 800
- DE-A1- 19 702 312
- DE-A1- 19 919 457
- DE-A1-3102004 016 51

## Beschreibung

Die Erfindung betrifft ein Kraftfahrzeug, umfassend ein die Geschwindigkeit des Kraftfahrzeugs regelndes Fahrerassistenzsystem und einen Motor, wobei das Fahrerassistenzsystem den Motor und/oder ein Bremssystem in Abhängigkeit von einer Sollbeschleunigung ansteuert, wobei wenigstens ein mit dem Fahrerassistenzsystem kommunizierendes Bedienelement vorgesehen ist, durch das bei Betätigung wenigstens ein insbesondere digitales Signal erzeugbar ist, wobei während der Betätigung des Bedienelements das Fahrerassistenzsystem in Abhängigkeit des ihm von dem Bedienelement übermittelten Signals zur Veränderung der Sollbeschleunigung und zur Ansteuerung des Motors und/oder des Bremssystems in Abhängigkeit von der veränderten Sollbeschleunigung ausgebildet ist.

Solche Fahrerassistenzsysteme sind weithin bekannt. Beispiele sind die sogenannte Geschwindigkeitsregelanlage (GRA, auch Tempomat genannt) und Abstandsregelsysteme (beispielsweise Adaptive Cruise Control (ACC)). Um die Geschwindigkeit eines Kraftfahrzeugs zu regeln, sind Beschleunigungs- und Bremsvorgänge erforderlich, wobei für die Zwecke dieser Erfindung das Wort "Beschleunigung" sowohl für positive als auch für negative Beschleunigungen verwendet werden soll, also für eine Beschleunigung und ein Abbremsen (negative Beschleunigung).

Um die Geschwindigkeit des Kraftfahrzeugs zu ändern, steuert das Fahrerassistenzsystem den Motor und/oder ein Bremssystem in Abhängigkeit von einer Sollbeschleunigung an. Dies geschieht meist, indem das Fahrerassistenzsystem einem Motorsteuergerät die Sollbeschleunigung übermittelt beziehungsweise mit einem Bremssystem kommuniziert, worauf das Motorsteuergerät den Motor ansteuert beziehungsweise das Bremssystem entsprechend abbremst. Unter der Ansteuerung des Motors durch das Fahrerassistenzsystem ist somit sowohl die unmittelbare Ansteuerung des Motors als auch die mittelbare Ansteuerung über ein Motorsteuergerät zu verstehen.

Bekannte die Geschwindigkeit des Kraftfahrzeugs regelnde Fahrerassistenzsysteme sind bewusst so ausgelegt, dass die maximal erreichbaren Beschleunigungswerte begrenzt sind. Dies gilt sowohl für positive Beschleunigungen, welche einen Antrieb über den Motor und das Getriebe bedingen, als auch für negative Beschleunigungen, welche über die Bremsen realisiert werden. Eine Begrenzung der Beschleunigungen ist notwendig, um ein komfortables, ruckfreies Fahren zu ermöglichen und den Fahrer nicht durch plötzlich auftretende heftige Fahrmanöver zu überraschen.

Eine Übersteuerung des Kraftfahrzeugs, also ein stärkeres Beschleunigen bzw. Abbremsen, ist fahrerseitig durch Betätigung des Gaspedals oder des Bremspedals möglich. Dabei wird nachteilhafterweise allerdings das Fahrerassistenzsystem deaktiviert, so dass es komfortmindernd danach erst wieder eingeschaltet werden muss.

Zudem wird die Begrenzung der Beschleunigungswerte in verschiedenen Fahrsituationen von Fahrern als störend empfunden. Als Beispiele sind hier das Ausscheren und Überholen von langsameren Fahrzeugen, das zügige Wegbeschleunigen eines Vorderfahrzeugs oder kurzzeitige Fehlreaktionen des Fahrerassistenzsystems (beispielsweise eine fehlerhafte Wahl des Ziels bei der Abstandsregelung oder die Beschleunigungsunterdrückung in der Kurvenfahrt) zu nennen. Solche Fälle treten auch bei einer negativen Sollbeschleunigung, also einem Abbremsen, auf, beispielsweise wenn Vorderfahrzeuge plötzlich einscheren, das Vorderfahrzeug plötzlich stärker bremst oder die Wunschgeschwindigkeit vor Kurven beispielsweise durch ein entsprechendes Bedienelement reduziert wird.

In allen diesen Fällen hat der Fahrer die Möglichkeit, durch Betätigung des Gas- oder Bremspedals in den Fahrbetrieb einzugreifen, was allgemein als bedienaufwändig und komfortmindernd bewertet wird. Der hauptsächliche Nachteil der bekannten Systeme ist jedoch, dass das Fahrerassistenzsystem bei Bremspedalbetätigung und teilweise auch bei Gaspedalbetätigung abgeschaltet wird, woraufhin es zunächst wieder aktiviert werden muss.

Ein Kraftfahrzeug der eingangs genannten Art ist aus DE 10 2004 016 513 A1 bekannt. Zwar ist bei diesem Kraftfahrzeug die Sollbeschleunigung veränderbar, jedoch erfolgt dies durch direktes Setzen der Beschleunigungsvorgabe basierend auf einer Kennlinie und der Fahrzeugeschwindigkeit.

Der vorliegenden Erfindung liegt daher die Aufgabe zugrunde, ein Kraftfahrzeug mit einem die Geschwindigkeit des Kraftfahrzeugs regelnden Fahrerassistenzsystem anzugeben, bei dem die Möglichkeit zur hinreichenden Veränderung des Sollbeschleunigungsverhaltens des Kraftfahrzeugs durch Interaktion des Fahrers gegeben ist.

Zur Lösung dieser Aufgabe ist bei einem Kraftfahrzeug der eingangs genannten Art erfindungsgemäß vorgesehen, dass das Fahrerassistenzsystem zur Veränderung der Sollbeschleunigung durch Addition bzw. Subtraktion einer von der Betätigungsdauer abhängigen Zusatzbeschleunigung zu einer aufgrund der aktuellen Fahrsituation ermittelten Basissollbeschleunigung ausgebildet ist, und/oder dass das Fahrerassistenzsystem bei Unterschreiten eines Minimaldifferenzbetrags zwischen veränderter Sollbeschleunigung und der oder einer aufgrund der aktuellen Fahrsituation ermittelten Basissollbeschleunigung bei anliegendem Signal zur Veränderung der Sollbeschleunigung derart ausgebildet ist, dass der Differenzbetrag, gegebenenfalls unter Überschreitung einer Maximalbeschleunigung, mindestens dem Minimaldifferenzbetrag entspricht.

Erfindungsgemäß ist im Kraftfahrzeug ein weiteres, dem Fahrerassistenzsystem zugeordnetes Bedienelement vorgesehen, welches bei Betätigung ein, Signal erzeugt, das dem Fahrerassistenzsystem, welchem es übermittelt wird, anzeigt, dass der Fahrer ein verändertes Beschleunigungsverhalten wünscht. Das bei Betätigung entstehende wenigstens eine Signal ist insbesondere digital, so dass es für das Fahrerassistenzsystem einfach verarbeitbar ist. Solange das Bedienelement betätigt wird, wird das entsprechende Signal erzeugt. Liegt das Signal nun an, verändert das Fahrerassistenzsystem die Sollbeschleunigung und übermittelt die veränderte Sollbeschleunigung beziehungsweise ein davon abhängiges Steuersignal dem Motorsteuergerät (bzw. dem Motor direkt), so dass der Motor entsprechend angesteuert wird, oder dem Bremssystem, falls für die negative Sollbeschleunigung die Motorbremswirkung nicht ausreicht. Ist ein digitales Signal vorgesehen, so wird die Beschleunigung anhand eines zuvor bestimmten Sollbeschleunigungsänderungsverhaltens geändert. Bei analoger Signalerzeugung ist die Veränderung der Sollbeschleunigung anhand der Signalstärke denkbar.

Vorteilhafterweise wird bei Betätigung des Bedienelements das Fahrerassistenzsystem nicht abgeschaltet. Endet die Betätigung des Bedienelements, so wird die Sollbeschleunigung wieder auf eine aufgrund der aktuellen Fahrsituation ermittelte Basissollbeschleunigung gesetzt, das Fahrerassistenzsystem bleibt weiter in Betrieb. Umständliches erneutes Inbetriebnehmen entfällt.

Dem Fahrer wird eine bequeme und wenig aufwändige Bedienmöglichkeit zur temporären Veränderung der Sollbeschleunigung, also der Fahrdynamik gegeben. Dies gilt insbesondere, wenn das Bedienelement als ein manuell zu betätigendes Bedienelement ausgebildet ist. Dann kann das Signal einfach durch Betätigung des Bedienelements mit der Hand erzeugt werden.

Insbesondere kann mittels des wenigstens einen Bedienelements ein Beschleunigungserhöhungssignal und ein Beschleunigungserniedrigungssignal erzeugbar sein, wobei das Fahrerassistenzsystem zur Erhöhung der Sollbeschleunigung bei Anliegen eines Beschleunigungserhöhungssignals und zum Erniedrigen der Sollbeschleunigung bei Anliegen eines Beschleunigungserniedrigungssignals ausgebildet ist. Dem Fahrer wird damit eine Übersteuerungsmöglichkeit in beide denkbaren Richtungen gegeben, also sowohl zur Erniedrigung als auch zur Erhöhung der Sollbeschleunigung. Eine Erniedrigung einer negativen Sollbeschleunigung bedeutet ein stärkeres Bremsen, eine Erhöhung ein stärkeres Beschleunigen.

Zur Art der Veränderung der Sollbeschleunigung bei Betätigung des Bedienelements sind mehrere Varianten denkbar, die auch nebeneinander verwendet werden können. So ist nach einer ersten Erfindungsvariante vorgesehen, dass das Fahrerassistenzsystem zur Veränderung der Sollbeschleunigung durch Addition bzw. Subtraktion einer von der Betätigungsdauer abhängigen Zusatzbeschleunigung zu einer aufgrund der aktuellen Fahrsituation ermittelten Basissollbeschleunigung ausgebildet ist. Die Basissollbeschleunigung dient dabei weiterhin als Grundlage, auf die eine feste, von der Betätigungszeit abhängige Sollbeschleunigung addiert wird. Der Verlauf und auch die Höhe der addierten bzw. subtrahierten Zusatzbeschleunigung kann dabei von weiteren Betriebsparametern des Kraftfahrzeugs, insbesondere der aktuellen Fahrzeuggeschwindigkeit und/oder der aktuellen Drehzahl, abhängig sein. Ebenso ist es vorteilhaft, wenn zur Bestimmung der Zusatzbeschleunigung Komfortkriterien berücksichtigt werden.

In einer speziellen Ausführungsform ist vorgesehen, dass die Zusatzbeschleunigung abhängig von der Betätigungsdauer insbesondere linear bis auf einen Maximalwert ansteigt und bei Beenden der Betätigung des Bedienelements insbesondere linear wieder auf Null abfällt. Auf diese Weise kann kein plötzliches, ruckhaftes Beschleunigen oder Abbremsen des Kraftfahrzeugs durch Betätigung des Bedienelements ausgelöst werden, da die Sollbeschleunigung langsam variiert wird. Bei einem linearen Anstieg der Zusatzbeschleunigung kann der Fahrer vorteilhafterweise den Effekt der Betätigung bzw. der weiteren Betätigung des Bedienelements gut abschätzen. Jedoch kann es aus Komfortgründen auch sinnvoll sein, nicht einen linearen Anstieg auf den Maximalwert vorzusehen, sondern einen nichtlinearen Anstieg. Insbesondere ist vorgesehen, dass bei Beenden der Betätigung des Bedienelements kein schlagartiger Abfall bzw. keine schlagartige Zunahme der Sollbeschleunigung auftreten kann, da auch hier ein zeitabhängiger, langsamer Abfall vorgesehen ist. In diesem Fall verändert das Fahrerassistenzsystem auch nach Beendigung der Betätigung die Sollbeschleunigung weiterhin so, dass sie ohne zu heftige Veränderungen wieder auf die Basissollbeschleunigung, die aufgrund der momentanen Fahrsituation ermittelt wird, zurückgeregelt wird.

Die Veränderung der Sollbeschleunigung muss jedoch nicht durch Addition einer bestimmten zeitabhängigen Zusatzbeschleunigung geschehen. Alternativ oder zusätzlich kann vorgesehen sein, dass eine Maximalbeschleunigung vorgesehen ist, die durch die veränderte Sollbeschleunigung nicht überschreitbar ist. Diese Maximalbeschleunigung kann auch von weiteren Betriebsparametern des Kraftfahrzeugs, insbesondere der aktuellen Fahrzeuggeschwindigkeit und/oder der aktuellen Drehzahl, abhängig sein. Eine solche Maximalbeschleunigung stellt hauptsächlich auf die Möglichkeiten des Kraftfahrzeugs ab. Damit wird nicht das Intervall definiert, in dem sich die Sollbeschleunigung von der Basissollbeschleunigung entfernen darf, sondern es wird, gegebenenfalls abhängig von weiteren Betriebsparametern, ein absolutes Maximum festgelegt, das nicht überschritten werden darf. Mit anderen Worten bedeutet dies, dass die mittels des Bedienelements maximal einstellbare Sollbeschleunigung nicht mehr abhängig von der aktuell ermittelten Basissollbeschleunigung ist.

Es ist auch denkbar, eine Minimalbeschleunigung auf ähnliche Art und Weise festzulegen, jedoch sind bezüglich des Bremssystems weniger deutliche betriebsbedingte Schranken, wie beispielsweise die Leistungsfähigkeit des Motors, zu beachten. Es sei an dieser Stelle angemerkt, dass das Kraftfahrzeug mittels des Bedienelements selbstverständlich nicht rückwärts bewegbar sein sollte.

Zusätzlich zu einer solchen Maximalbeschleunigung oder gegebenenfalls auch einer Minimalbeschleunigung kann auch wenigstens eine maximale Änderungsrate vorgesehen sein, wobei das Fahrerassistenzsystem so ausgebildet ist, dass die Änderungsrate der Sollbeschleunigung die maximale Änderungsrate nicht überschreitet. Die hier genannte maximale Änderungsrate kann global für alle Veränderungen der Sollbeschleunigung gelten, jedoch kann auch vorgesehen sein, dass beispielsweise für Erhöhungsvorgänge und Erniedrigungsvorgänge unterschiedliche maximale Änderungsraten vorgesehen sind. Im Resultat bedeutet dies, dass bei Betätigung des Bedienelements, beispielsweise bei der Erzeugung eines Beschleunigungserhöhungssignals, die Sollbeschleunigung mit der maximalen Änderungsrate solange erhöht wird, bis die Maximalbeschleunigung erreicht ist. Dort wird sie bei weiter betätigtem Bedienelement, also weiterhin anliegendem Signal, bei der Maximalbeschleunigung gehalten. Dabei ist zu beachten, dass sich, da sich in den meisten Fällen die Geschwindigkeit ändert, auch die Maximalbeschleunigung ändern kann, wenn sie von der Fahrzeuggeschwindigkeit abhängig ist. Ähnliches gilt natürlich für andere Parameter, von denen die Maximalbeschleunigung abhängig sein kann. Dann wird immer die aktuelle Maximalbeschleunigung beachtet, wobei beim Beschleunigen oder Abbremsen auf die neue Maximalbeschleunigung wiederum die maximale Änderungsrate zu beachten ist. Auch die maximale Änderungsrate kann in weiterer Ausgestaltung von Betriebsparametern abhängig sein, insbesondere von einem Betriebszustand des Kraftfahrzeugs. Die wenigstens eine maximale Änderungsrate kann beispielsweise davon abhängig sein, ob die aktuelle Ist-Fahrzeugbeschleunigung positiv oder negativ ist, ob sich das Kraftfahrzeug folglich in einem Beschleunigungs- oder Bremszustand befindet.

Nach einer weiteren Erfindungsvariante ist vorgesehen, dass das Fahrerassistenzsystem bei Unterschreiten eines Minimaldifferenzbetrags zwischen veränderter Sollbeschleunigung und der oder einer aufgrund der aktuellen Fahrsituation ermittelten Basissollbeschleunigung bei anliegendem Signal zur Veränderung der Sollbeschleunigung derart ausgebildet ist, dass der Differenzbetrag, gegebenenfalls unter Überschreitung einer Maximalbeschleunigung, mindestens dem Minimaldifferenzbetrag entspricht. In dieser Ausführungsform geht es darum, sicherzustellen, dass eine gewisse Wirkung der Betätigung des Bedienelements immer sichergestellt ist. So kann es beispielsweise vorkommen, dass die Basissollbeschleunigung schon sehr nahe an einer Maximalbeschleunigung liegt. Betätigt der Fahrer nun das Bedienelement zur Erzeugung eines Beschleunigungserhöhungssignals, so tritt kein merklicher Effekt auf, da die Basissollbeschleunigung und die Maximalbeschleunigung nahe beieinander liegen. Das bedeutet, die Differenz zwischen der veränderten Sollbeschleunigung (entspricht hier der Maximalbeschleunigung) und der Basissollbeschleunigung ist klein, und es liegt weiterhin ein Signal des Bedienelements an, der Fahrer erwartet folglich einen spürbaren Effekt. Darum ist in dieser Ausführungsform ein Minimaldifferenzbetrag vorgesehen, der einen gewissen Minimaleffekt der Betätigung des Bedienelements sicherstellt. So ist vorgesehen, dass bei einem Differenzbetrag, der kleiner als der Minimaldifferenzbetrag ist, bei anliegendem Signal, auch wenn dies eine Überschreitung der Maximalbeschleunigung bedingt, soweit weiter beschleunigt wird, bis der Differenzbetrag mindestens dem Minimaldifferenzbetrag entspricht. Dabei sind selbstverständlich gegebenenfalls wieder maximale Änderungsraten zu beachten, die Maximalbeschleunigung kann in einem solchen Fall jedoch überschritten werden.

Bei den bisher diskutierten Ausführungsbeispielen, insbesondere bei Verwendung eines digitalen Signals, wird jeweils ein für die aktuellen Betriebsparameter festes Sollbeschleunigungsänderungsverhalten definiert, welches betätigungszeitabhängig angibt, wie stark die Sollbeschleunigung bei wie langer Betätigung des Bedienelements verändert wird. Oft besteht jedoch auch fahrerseitig der Wunsch, weiteren Einfluss auf ein solches Sollbeschleunigungsänderungsverhalten zu nehmen. Dem kann im Rahmen der vorliegenden Erfindung dadurch nachgekommen werden, dass eine Bedienfunktion zur Veränderung eines zuvor bestimmten Sollbeschleunigungsänderungsverhaltens vorgesehen ist. Dabei kann es sich beispielsweise um einen Regler handeln, mit dem bestimmte Parameter, die das Sollbeschleunigungsänderungsverhalten charakterisieren, veränderbar sind. Beispielsweise ist vorstellbar, dass so fahrerseitig eine geänderte maximale Änderungsrate oder eine geänderte Maximalbeschleunigung eingestellt werden kann.

Mit besonderem Vorteil kann jedoch vorgesehen sein, dass als die Bedienfunktion ein Beenden der Betätigung des Bedienelements vorgesehen ist, wobei nach Beendigung der Betätigung für eine vorbestimmte Zeitdauer bei erneuter Betätigung ein verändertes Sollbeschleunigungsänderungsverhalten anwählbar ist. Das bedeutet, der Fahrer kann durch kurzzeitiges Loslassen des betätigten Bedienelements ein verändertes, alternatives Sollbeschleunigungsänderungsverhalten anwählen. Beispielsweise kann ein Fahrer, der eine stärkere Erhöhung der Beschleunigung wünscht, das bereits betätigte Bedienelement loslassen. Betätigt er innerhalb einer vorbestimmten Zeitdauer, beispielsweise innerhalb einer Sekunde, das Bedienelement erneut, so wird die Sollbeschleunigung wiederum verändert, jedoch mit einer größeren Änderungsrate. Ein solcher Vorgang kann auch iterierbar sein, das bedeutet, wird das Bedienelement bei einem angewählten veränderten Sollbeschleunigungsänderungsverhalten losgelassen, so kann für die vorbestimmte Zeitdauer bei erneuter Betätigung ein zweites, weiter verändertes Sollbeschleunigungsänderungsverhalten anwählbar sein, beispielsweise eine noch stärkere Änderungsrate.

Das Anwählen des veränderten Sollbeschleunigungsänderungsverhaltens muss nicht durch ein solches Loslassen des Bedienelements anwählbar sein, es kann auch vorgesehen sein, dass es beispielsweise durch eine kurze Betätigung des Bedienelements zur Verfügung gestellt wird. Dabei wäre beispielsweise an ein Antippen des Bedienelements zu denken. Auch kann die Funktionalität des Bedienelements weiter ausgeweitet werden. Beispielsweise kann bei einem zu drückenden Bedienelement vorgesehen sein, dass dieses gegen einen Widerstand weiter in Betätigungsrichtung drückbar ist, so dass hierdurch ein verändertes Sollbeschleunigungsänderungsverhalten anwählbar ist.

Damit eine eindeutige Regelung des Bezugs des Bedienelements zu anderen Bedienelementen zur Beeinflussung der Fahrzeugbeschleunigung ermöglicht wird, ist eine Priorisierung der entsprechenden Bedienelemente notwendig. Zweckmäßigerweise kann vorgesehen sein, dass das Fahrerassistenzsystem zur Nichtberücksichtigung der Signale bei einem betätigten Gas- und/oder Bremspedal ausgebildet ist. Das Gas- und/oder Bremspedal bietet zum einen aufgrund seiner analogen Konstruktion eine genauere Regelung des Beschleunigungs- und/oder Abbremsverhaltens des Kraftfahrzeugs, zum anderen ist es das übliche, dem Fahrer bekannte Bedienelement, und sollte somit grundsätzlich Priorität über eine Betätigung des Bedienelements haben. So kann beispielsweise eine Vollbremsung notwendig sein, die über das Bedienelement nicht erreichbar ist. Dann kann der Fahrer wie gewohnt das Bremspedal betätigen, dessen Signal als das maßgebliche Signal berücksichtigt wird.

Wie schon erwähnt ist es zweckmäßig, wenn von dem wenigstens einen Bedienelement ein Beschleunigungserhöhungssignal und ein Beschleunigungserniedrigungssignal erzeugt werden kann. Dazu sind im Wesentlichen zwei Ausgestaltungen denkbar.

Zum einen kann vorgesehen sein, dass mittels des einen Bedienelements abhängig von der Art der Betätigung ein Beschleunigungserhöhungssignal und ein Beschleunigungserniedrigungssignal erzeugbar ist. Dabei ist nur ein Bedienelement vorgesehen, das jedoch auf mehrere Arten betätigbar ist. Abhängig von der Art der Betätigung wird dann ein Beschleunigungserhöhungssignal oder ein Beschleunigungserniedrigungssignal erzeugt und an das Fahrerassistenzsystem übermittelt.

Alternativ kann vorgesehen sein, dass zwei Bedienelemente vorgesehen sind, wobei über das erste Bedienelement ein Beschleunigungserhöhungssignal und über das zweite Bedienelement ein Beschleunigungserniedrigungssignal erzeugbar ist. Dann sind zwei auch physikalisch getrennte Bedienelemente vorgesehen, von denen eines eindeutig der Beschleunigungserhöhung, ein weiteres eindeutig der Beschleunigungserniedrigung zugeordnet ist. Mit besonderem Vorteil sind die zwei Bedienelemente, insbesondere ihre Verschaltung, so ausgelegt, dass bei gleichzeitiger Betätigung der Bedienelemente nur ein Signal erzeugbar ist. Es kann jedoch auch vorgesehen sein, dass bei zwei erzeugten Signalen, also einem Beschleunigungserhöhungssignal und einem Beschleunigungserniedrigungssignal, die Steuerungseinrichtung zur bevorzugten Behandlung nur eines dieser Signale ausgebildet ist. Aus sicherheitstechnischen Gründen kann dabei beispielsweise das Beschleunigungserniedrigungssignal erzeugt bzw. bevorzugt von der Steuerungseinrichtung behandelt werden. In einer dritten, alternativen Ausführungsform kann vorteilhafterweise auch vorgesehen sein, dass bei gleichzeitiger Betätigung der Bedienelemente kein Signal erzeugbar ist oder das Fahrerassistenzsystem bei gleichzeitigem Anliegen von zwei Signalen zum Ignorieren beider Signale ausgebildet ist. Dies ist auch eine intuitiv eingängige Lösung, da bei gleichzeitigem Erhöhen und Erniedrigen der Beschleunigung im Effekt nichts geschehen sollte.

In weiterer Ausgestaltung des Kraftfahrzeugs kann über das oder die Bedienelemente wenigstens eine weitere Funktion des Fahrerassistenzsystems anwählbar sein. Dann ist mit besonderem Vorteil das wenigstens eine Bedienelement zur Anwahl mehrerer Funktionen nutzbar, so dass die Anzahl der Bedienelemente im Kraftfahrzeug reduziert wird. Eine solche weitere Funktion des Fahrerassistenzsystems kann beispielsweise eine Erhöhung oder Erniedrigung der Regelgeschwindigkeit sein. Da auch hierdurch üblicherweise eine Beschleunigung oder ein Abbremsen ausgelöst wird, ist es intuitiv, dasselbe Bedienelement sowohl für diese weitere Funktion als auch zur Erzeugung des Signals auszubilden. Zweckmäßig ist es, wenn das oder die durch Drücken bedienbaren Bedienelemente über einen Widerstand von einer ersten Betätigungsposition weiter in Betätigungsrichtung in eine zweite Betätigungsposition drückbar sind, wobei jeweils eine Betätigungsposition der weiteren Funktion und eine der Erzeugung des Signals zugeordnet ist. Die erste Betätigungsposition kann dabei beispielsweise der Erhöhung bzw.

Erniedrigung der Regelgeschwindigkeit dienen. Wird das Bedienelement jedoch weiter in die zweite Betätigungsposition betätigt, so wird das Signal erzeugt.

Das oder die Bedienelemente können zusätzlich einem weiteren Fahrzeugsystem zugeordnet sein. Dabei kann vorgesehen sein, dass die Bedienelemente zwischen einem dem Fahrerassistenzsystem und einem dem weiteren Fahrzeugsystem zugeordneten Bedienmodus umschaltbar sind. Dann kann vorgesehen sein, dass die Bedienelemente zur Erzeugung der Signale nur bei aktivem Fahrerassistenzsystem ausgebildet sind. Ein solches weiteres Fahrzeugsystem kann beispielsweise ein Stauassistenzsystem sein, das bekanntlich nur bei sehr niedrigen Geschwindigkeiten benötigt wird. Dann können sich diese beiden Systeme beispielsweise das Bedienelement teilen. Ebenso ist denkbar, dass Schaltelemente einer Tiptronic-Schaltung, beispielsweise eine Getriebeschaltwippe, zusätzlich als Bedienelement dienen. In diesen Fällen kann vorteilhafterweise eine zur Anzeige des Bedienmodus ausgestaltete Anzeigevorrichtung vorgesehen sein. Dann kann der Fahrer auf einen Blick erkennen, in welchem Bedienmodus sich das Bedienelement gerade befindet bzw. ob beispielsweise Signale erzeugbar sind.

Wie bereits erwähnt, kann das oder die Bedienelemente manuell betätigbar sein. Eine manuelle Betätigung ist mit weniger Aufwand verbunden als eine Betätigung beispielsweise des Gas- oder Bremspedals mit dem Fuß.

Damit das oder die Bedienelemente durch einen Fahrer zur manuellen Betätigung leicht erreichbar sind, können das oder die Bedienelemente im Griffbereich der am Lenkrad befindlichen Hände, also an oder benachbart zu einem Lenkrad, angeordnet sein. Dann muss der Fahrer keine weiten Griffbewegungen durchführen, sondern erhält eine einfache und komfortable Möglichkeit, die Beschleunigung des Kraftfahrzeugs nachzuregeln. Insbesondere kann das Bedienelement auch ein am Lenkstock angeordneter Bedienhebel sein. Denkbar wäre auch, als Bedienelement einen insbesondere im Bereich einer Mittelkonsole zwischen den Vordersitzen angeordneten Getriebewählhebel zu verwenden.

In einer besonders vorteilhaften Ausgestaltung kann eine automatische Bremseinrichtung zum Halten des entweder durch das Fahrerassistenzsystem selber oder durch Betätigung des oder eines Bedienelements in den Stillstand gebrachten Kraftfahrzeugs vorgesehen sein. Sinkt die Geschwindigkeit des Kraftfahrzeugs durch entsprechende Ansteuerung des Motors mit einer gegebenenfalls veränderten Sollbeschleunigung demnach auf Null, so wird eine Bremseinrichtung aktiviert, die verhindert, dass das Kraftfahrzeug sich beispielsweise durch das Standgas oder durch einen geneigten Fahruntergrund wieder in Bewegung setzen kann. Solche Bremseinrichtungen sind vom Prinzip her bekannt, da sie beispielsweise bei Abstandshaltesystemen regelmäßig eingesetzt werden. Wird das Kraftfahrzeug - entweder durch Betätigung des Gaspedals oder durch das Fahrerassistenzsystem - wieder beschleunigt, so löst sich die automatische Bremseinrichtung selbsttätig wieder.

Eine solche Bremseinrichtung kann vorteilhafterweise mit einer Innenraumüberwachung oder dergleichen verbunden werden. Dabei soll überprüft werden, ob sich der Fahrer noch ordnungsgemäß im Fahrersitz befindet. Es wird beispielsweise festgestellt, ob der Fahrer das Kraftfahrzeug durch Betätigung des Bedienelements zum Stillstand bringt und das Fahrzeug danach verlässt. In solchen Fällen wird die Bremseinrichtung deaktiviert und ein anderes Bremssystem, beispielsweise eine Handbremse, wird aktiviert. Alternativ kann selbstverständlich auch ein Warnsignal gegeben werden. Eine solche Innenraumüberwachung kann verschieden ausgestaltet werden. So kann eine Kamera vorgesehen sein, deren aufgenommene Bilder durch eine Bildverarbeitung analysiert werden, oder es kann ein Sensor vorgesehen sein, der feststellt, ob der Fahrersitz besetzt ist.

Weitere Vorteile und Einzelheiten der vorliegenden Erfindung ergeben sich aus den im folgenden beschriebenen Ausführungsbeispielen sowie anhand der Zeichnungen. Dabei zeigen:
- Fig. 1: eine Prinzipskizze des erfindungsgemäßen Kraftfahrzeugs,
- Fig. 2: das Lenkrad des erfindungsgemäßen Kraftfahrzeugs in einer ersten Ausführungsform,
- Fig. 3: einen am Lenkstock angebrachten Bedienhebel in dem erfindungsgemäßen Kraftfahrzeug gemäß einer zweiten Ausführungsform,
- Fig. 4: Graphen, die die Sollbeschleunigung und die Signale im zeitlichen Verlauf für ein erstes Ausführungsbeispiel zeigen,
- Fig. 5: Graphen, die die Sollbeschleunigung und die Signale im zeitlichen Verlauf für ein zweites Ausführungsbeispiel zeigen,
- Fig. 6: Graphen, die die Sollbeschleunigung und die Signale im zeitlichen Verlauf für ein drittes Ausführungsbeispiel zeigen,
- Fig. 7: ein Graph, der eine Maximalbeschleunigung in Abhängigkeit von der Ist-Geschwindigkeit des Kraftfahrzeuges zeigt, und
- Fig. 8: Graphen, die die Sollbeschleunigung und die Signale im zeitlichen Verlauf bei der Anwahl eines veränderten Sollbeschleunigungsänderungsverhalten zeigen.

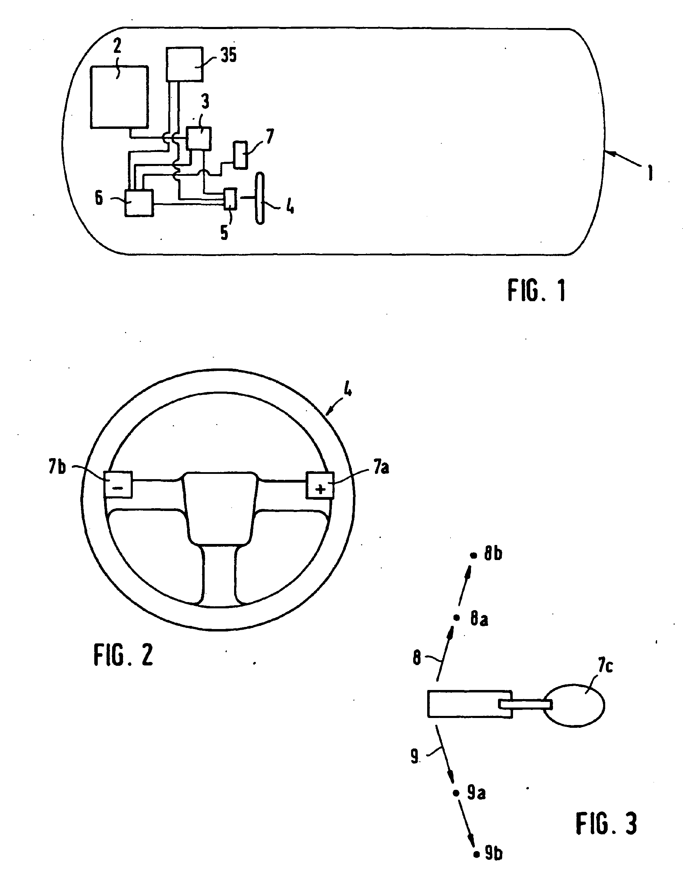

Fig. 1 zeigt ein erfindungsgemäßes Kraftfahrzeug 1. Es umfasst einen Motor 2, der von einem Motorsteuergerät 3 angesteuert wird, sowie ein Bremssystem 35.

Das Motorsteuergerät 3 erhält Steuersignale, nach denen es den Motor 2 steuert, aus verschiedenen Quellen. Zunächst ist unterhalb eines Lenkrades 4 eine Pedalerie 5 vorgesehen, die im Falle eines Automatikgetriebes ein Gaspedal und ein Bremspedal umfasst, im Falle eines Handschaltgetriebes zusätzlich ein Kupplungspedal. Über die Pedalerie 5 kann eine unmittelbare Ansteuerung des Motors 2 beziehungsweise des Bremssystems 35 erfolgen.

Zusätzlich ist ein Fahrerassistenzsystem 6 zur Regelung der Geschwindigkeit des Kraftfahrzeugs vorgesehen, hier ein ACC-System. Auch dieses kommuniziert mit dem Motorsteuergerät 3, mittels welchem es den Motor 2 ansteuert, und dem Bremssystem 35, mittels welchem es die Bremsen ansteuert. Im Bereich des Lenkrades 4, also am Lenkrad 4 oder benachbart dazu, ist weiterhin wenigstens ein Bedienelement 7 zur manuellen Betätigung vorgesehen, das mit dem Fahrerassistenzsystem 6 kommuniziert und durch das bei Betätigung wenigstens ein digitales Signal erzeugbar ist. Dieses digitale Signal wird während der Betätigung dem Fahrerassistenzsystem 6 übermittelt. Das Fahrerassistenzsystem 6 ist dazu ausgebildet, bei anliegendem Signal in Abhängigkeit des Signals die Sollbeschleunigung zu verändern und den Motor 2 und/oder das Bremssystem 35 in Abhängigkeit von der veränderten Sollbeschleunigung über das Motorsteuergerät 3 anzusteuern.

Ausführungsbeispiele für das oder die Bedienelemente 7 sind in den Fig. 2 und 3 dargestellt.

Fig. 2 zeigt das Lenkrad 4 aus der Sicht eines Fahrers. Es umfasst zwei Bedienelemente 7a, 7b, die mit "+" und "-" beschriftet sind. Bei einer Betätigung des Bedienelements 7a wird ein Beschleunigungserhöhungssignal erzeugt und dem Fahrerassistenzsystem 6 übermittelt, welches während der Betätigung des Bedienelements 7a die Sollbeschleunigung erhöht und den Motor 2 mit der entsprechend veränderten Sollbeschleunigung ansteuert. Durch Betätigung des Bedienelements 7b wird analog ein Beschleunigungserniedrigungssignal erzeugt und an das Fahrerassistenzsystem 6 übermittelt, welches analog für eine Erniedrigung der Sollbeschleunigung sorgt. Die Bedienelemente 7a und 7b sind durch die am Lenkrad 4 befindlichen Hände leicht erreichbar.

Die beiden Bedienelemente 7a und 7b bzw. das Fahrerassistenzsystem 6 sind so ausgestaltet, dass bei gleichzeitiger Betätigung der Bedienelemente 7a und 7b kein Signal erzeugt wird.

Die beiden Bedienelemente 7a und 7b sind in diesem Ausführungsbeispiel lediglich dem Fahrerassistenzsystem 6 zugeordnet. Es ist jedoch auch möglich, dass die Bedienelemente zusätzlich einem weiteren Fahrzeugsystem zugeordnet sind. So kann vorgesehen sein, dass die Bedienelemente 7a und 7b Getriebeschaltwippen im Rahmen einer Tiptronic-Schaltung sind. Es sind dann zwei Betriebsmodi verfügbar, wobei dem Fahrer mittels einer Anzeigevorrichtung mitgeteilt wird, welchem Zweck die Bedienelemente 7a, 7b augenblicklich dienen. Die Einstellung des Bedienmodus kann beispielsweise durch ein weiteres Bedienelement durch den Fahrer erfolgen oder aber vom Betrieb des Fahrerassistenzsystems 6 abhängig gemacht werden.

Fig. 3 zeigt einen am Lenkstock des Lenkrads 4 angeordneten Bedienhebel 7c, der als Alternative zu den Bedienelementen 7a und 7b verwendet werden kann. In dem Bedienhebel 7c sind mehrere Bedienfunktionen des Fahrerassistenzsystems 6 vereint. Der Bedienhebel 7c kann zur Betätigung in Richtung des Pfeils 8 nach oben bewegt werden oder in Richtung des Pfeils 9 nach unten. Dabei ist zunächst eine erste Betätigungsposition 8a bzw. 9a vorgesehen. Aus diesen ersten Betätigungspositionen kann der Hebel gegen einen Widerstand weiter in Richtung der Pfeile 8 bzw. 9 gedrückt werden, wodurch eine zweite Betätigungsposition 8b bzw. 9b erreicht wird.

Eine Betätigung des Bedienhebels 7c bis lediglich in die erste Betätigungsposition 8a sorgt für eine Erhöhung der Regelgeschwindigkeit um 10 km/h ("Tip-up-Funktion"). Ein Bewegen des Bedienhebels 7c in die erste Betätigungsposition 9a in Richtung des Pfeils 9 löst eine Erniedrigung der Regelgeschwindigkeit um 10 km/h aus ("Tip-down-Funktion"). Wird der Bedienhebel 7c jedoch in eine der zweiten Betätigungspositionen 8b bzw. 9b gebracht, so wird ein digitales Signal zur Veränderung der Sollbeschleunigung erzeugt. In der Position 8b wird ein digitales Beschleunigungserhöhungssignal erzeugt und an das Fahrerassistenzsystem 6 übermittel. Befindet sich der Bedienhebel 7c in der zweiten Betätigungsposition 9b, wird ein digitales Beschleunigungserniedrigungssignal erzeugt und an das Fahrerassistenzsystem 6 übermittelt.

Um zu verhindern, dass z. B. bei langsamer Betätigung des Bedienhebels 7c in Richtung des Pfeils 8 ungewollt auch die Wunschgeschwindigkeit erhöht wird, kann eine zeitliche Entprellung der Tip-up-Funktion vorgesehen sein. Alternativ ist es jedoch auch möglich, dass eine automatische Korrektur der Regelgeschwindigkeit bei Erreichen der zweiten Betätigungsposition 8b bzw. 9b erfolgt, das bedeutet, dass zunächst wegen des Passierens der ersten Betätigungsposition 8a bzw. 9a die Regelgeschwindigkeit um 10 km/h verändert wird, dies aber unmittelbar nach Erreichen der zweiten Betätigungsposition 8b bzw. 9b wieder korrigiert wird.

In einer weiteren dritten Ausführungsform, die hier nicht näher dargestellt ist, wird als Bedienelement eine "Resume"-Taste des Fahrerassistenzsystem 6 verwendet. Eine "Resume"-Taste" reaktiviert das Fahrerassistenzsystem 6 mit einer zuvor eingespeicherten Regelgeschwindigkeit. Während des Betriebs des Fahrerassistenzsystems 6 ist die "Resume"-Taste demnach ohne Funktion. Daher kann sie ebenso zur Erzeugung eines Signals zur Änderung der Sollbeschleunigung verwendet werden.

Dabei sind zwei Varianten zu unterscheiden. Zum einen ist es möglich, dass unabhängig vom Betriebszustand des Kraftfahrzeugs 1 (Bremsen oder Beschleunigen) ein Beschleunigungserhöhungssignal oder ein Beschleunigungserniedrigungssignal erzeugt und an das Fahrerassistenzsystem 6 übermittelt wird. Dabei ist nur entweder eine Erhöhung der Sollbeschleunigung oder eine Erniedrigung der Sollbeschleunigung möglich, beides ist nicht möglich.

In einer weiteren Variante kann die Veränderung der Sollbeschleunigung jedoch vom Betriebszustand des Kraftfahrzeugs 1 abhängig gemacht werden. Wird die "Resume"-Taste während einer Beschleunigungsphase des Kraftfahrzeugs 1 (Motor 2 treibt an) betätigt, wird ein Beschleunigungserhöhungssignal erzeugt und an das Fahrerassistenzsystem 6 übermittelt, das entsprechend die Sollbeschleunigung erhöht. Wird die "Resume"-Taste betätigt, während sich das Kraftfahrzeug 1 in einem Bremszustand befindet, so wird ein Sollbeschleunigungserniedrigungssignal erzeugt und an das Fahrerassistenzsystem 6 übermittelt, welches die Sollbeschleunigung entsprechend erniedrigt.

Im Folgenden soll zur Vereinfachung bei einer Betätigung irgendeines der genannten Bedienelemente 7a, 7b, 7c bzw. "Resume"-Taste immer nur von der Betätigung des Bedienelements 7 die Rede sein. Damit sollen aber alle möglichen Ausführungen, insbesondere auch die Ausführungen mit zwei Bedienelementen 7, erfasst sein.

Die Veränderung der Sollbeschleunigung, also das Sollbeschleunigungsänderungsverhalten, kann im Rahmen der Erfindung auf verschiedene Weise ausgestaltet sein. Verschiedene mögliche Varianten sollen in den nun folgenden Ausführungsbeispielen näher erläutert werden. In allen dargestellten Ausführungsbeispielen ist eine positive Beschleunigung im Zusammenhang mit einem Beschleunigungserhöhungssignal dargestellt. Selbstverständlich verlaufen die Fälle, in denen die Sollbeschleunigung negativ ist bzw. ein Beschleunigungserniedrigungssignal erzeugt wird, analog, die dargestellten Konzepte lassen sich ohne Probleme auf diese anderen möglichen Fälle übertragen.

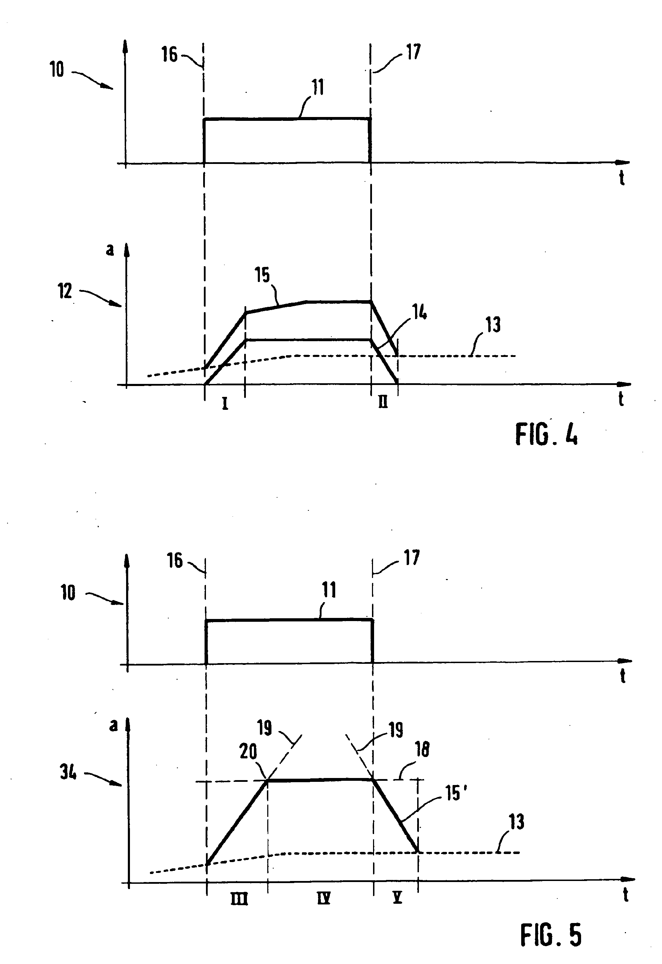

Fig. 4 zeigt Graphen, die die Veränderung der Sollbeschleunigung mit der Zeit und das Beschleunigungserhöhungssignal darstellen. Der obere Graph 10 zeigt das Anliegen eines Beschleunigungserhöhungssignals 11 gegen die Zeit t, der untere Graph 12 zeigt die aufgrund der aktuellen Fahrsituation ermittelte Basissollbeschleunigung 13, eine aufgrund der Betätigung des Bedienelements auf diese zu addierende Zusatzbeschleunigung 14 und die resultierende veränderte Sollbeschleunigung 15 gegen die Zeit t.

Die Kurve 13 stellt die aufgrund der aktuellen Fahrsituation ermittelte Basissollbeschleunigung dar. Dies ist diejenige Sollbeschleunigung, die unabhängig von dem wenigstens einen Bedienelement 7 durch das Fahrerassistenzsystem 6 im normalen Betrieb ermittelt wird. Ist dem Fahrer des Kraftfahrzeugs 1 diese Basissollbeschleunigung 13 nicht ausreichend und wünscht er eine höhere Beschleunigung, so kann er das Bedienelement 7 derart betätigen, dass ein Beschleunigungserhöhungssignal 11 erzeugt und an das Fahrerassistenzsystem 6 übermittelt wird. Dies geschieht zum Zeitpunkt 16. Durch die dann stattfindende Betätigung des Bedienelements 7 wird das digitale Beschleunigungserhöhungssignal 11 erzeugt. Zum Zeitpunkt 17 endet die Betätigung des Bedienelements 7, so dass auch kein Signal mehr erzeugt wird.

In dem Fahrerassistenzsystem 6 ist nun eine Schar von Zusatzbeschleunigungskurven 14 abgelegt, die von verschiedenen Betriebsparametern des Kraftfahrzeugs 1, insbesondere der Fahrzeuggeschwindigkeit, abhängig sein soll. Hier dargestellt ist diejenige Zusatzbeschleunigung 14, die der aktuellen Geschwindigkeit des Kraftfahrzeugs 1 entspricht. Die Zusatzbeschleunigung 14 steigt abhängig von der Betätigungszeit zunächst im Bereich I linear an, bis ein Maximalwert erreicht wird. Dieser wird solange gehalten, bis die Betätigung des Bedienelements endet, also kein Beschleunigungserhöhungssignal 11 mehr anliegt, Zeitpunkt 17. Nach dem Zeitpunkt 17 fällt die Zusatzbeschleunigung 14 im Zeitbereich II linear, gegebenenfalls mit einem anderen Steigungsbetrag, wieder auf Null ab. Die Zusatzbeschleunigung 14 wird nun zu jedem Zeitpunkt anhand der entsprechenden Kurve bestimmt und auf die Basissollbeschleunigung 13 addiert. Es ergibt sich die veränderte Sollbeschleunigung 15, mit der der Motor 2 dann tatsächlich angesteuert wird.

Dabei ist zu beachten, dass sich die aktuelle Ist-Geschwindigkeit des Kraftfahrzeugs 1 während der Veränderung der Sollbeschleunigung noch ändern kann. Im Ausführungsbeispiel wird, obwohl dies aus Übersichtlichkeitsgründen nicht näher dargestellt ist, dann immer die aktuelle, dieser Geschwindigkeit zugeordnete Zusatzbeschleunigungskurve gewählt und die entsprechende Zusatzbeschleunigung abhängig von der Bediendauer bzw. Signaldauer zu der Basissollbeschleunigung 13 addiert. Das Gleiche gilt selbstverständlich auch für die weiteren Ausführungsbeispiele in den Fig. 5 - 8, wo diese geschwindigkeitsabhängige Veränderung der Sollbeschleunigung bzw. der Zusatzbeschleunigungen oder der unten noch näher erläuterten Maximalbeschleunigungen der Übersichtlichkeit halber nicht in die Graphen eingezeichnet sind.

Fig. 5 zeigt ein weiteres Ausführungsbeispiel zur Veränderung der Sollbeschleunigung. Der obere Graph 10 stellt wiederum das Beschleunigungserhöhungssignal 11, das zum Zeitpunkt 16 erzeugt wird und zum Zeitpunkt 17 durch Beenden der Betätigung des Bedienelements 7 endet, gegen die Zeit t aufgetragen dar. Im unteren Teil der Fig. 5 ist im Graphen 34 die Basissollbeschleunigung 13, maximale Änderungsraten 19, eine Maximalbeschleunigung 18 sowie die resultierende veränderte Sollbeschleunigung 15' aufgetragen. Die Basissollbeschleunigung 13 wurde schon in Bezug auf die Fig. 4 näher erläutert.

Die maximalen Änderungsraten 19 geben an, wie hoch die Änderungsrate der Sollbeschleunigung, mithin also die Steigung der die Sollbeschleunigung beschreibenden Kurve, maximal sein darf. Die Maximalbeschleunigung 18, die wiederum von weiteren Betriebsparametern des Kraftfahrzeugs 1, insbesondere der Ist-Geschwindigkeit, abhängig ist, gibt - unabhängig von der aktuellen Basissollbeschleunigung - an, welchen Wert die veränderte Sollbeschleunigung 15' nicht überschreiben darf. Zu Beginn der Betätigung des Bedienelementes 7, Zeitpunkt 16, wird im Bereich III demnach zunächst die Sollbeschleunigung 15' linear mit einer Änderungsrate erhöht, die der maximalen Änderungsrate 19 zum Erhöhen der Sollbeschleunigung entspricht. Am Ende des Zeitbereichs III, Zeitpunkt 20, ist die Maximalbeschleunigung 18 erreicht. Da diese nicht überschritten werden darf, bleibt die veränderte Sollbeschleunigung 15' nun konstant auf dem Wert der Maximalbeschleunigung 18, Bereich IV. An dieser Stelle ist wiederum zu beachten, dass die Maximalbeschleunigung 18 noch von weiteren Betriebsparametern des Kraftfahrzeugs 1 abhängt, so dass sie sich mit der Zeit t verändert. Selbstverständlich wird die resultierende veränderte Sollbeschleunigung dann unter Beachtung der maximalen Änderungsrate 19 entsprechend angepasst, was der Übersichtlichkeit halber im Graphen 34 jedoch nicht dargestellt ist. Zum Zeitpunkt 17 endet das Beschleunigungserhöhungssignal 11, woraufhin die veränderte Sollbeschleunigung 15' im Bereich V mit der maximal erlaubten Änderungsrate 19 bei Erniedrigung der Sollbeschleunigung solange erniedrigt, bis sie wiederum die Basissollbeschleunigung 13 erreicht. Auch die maximalen Änderungsraten 19 können von Betriebsparametern abhängig sein, beispielsweise davon, ob sich das Kraftfahrzeug 1 gerade in einem Antriebszustand oder einem Bremszustand befindet.

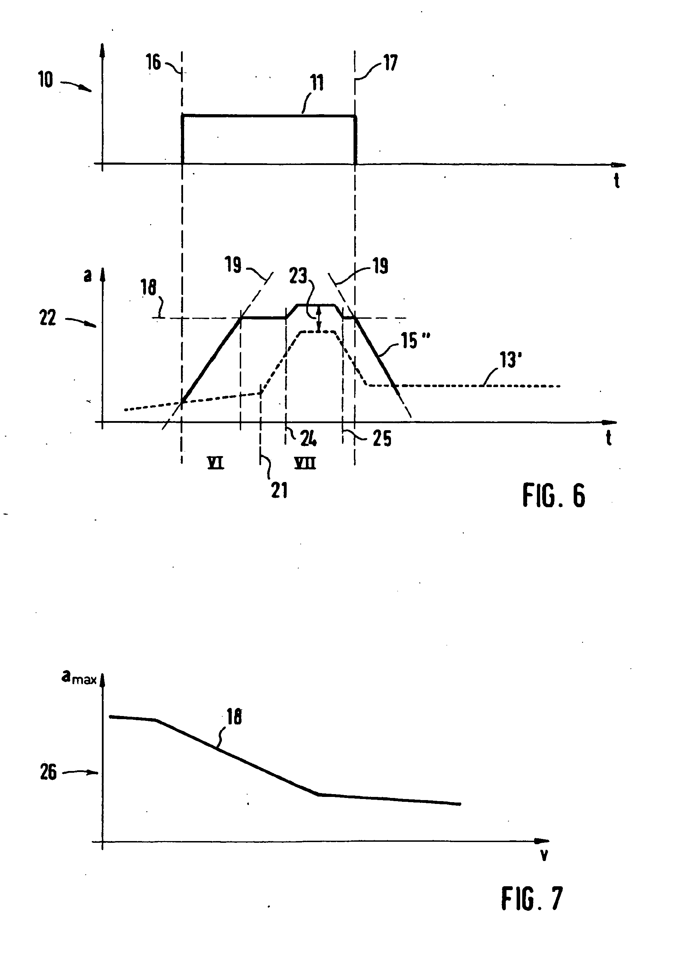

Im dritten Ausführungsbeispiel in Fig. 6 ist im oberen Graphen 10 wiederum das vom Zeitpunkt 16 bis zum Zeitpunkt 17 anliegende Beschleunigungserhöhungssignal 11 dargestellt. Im unteren Graphen 22 sind wiederum die Basissollbeschleunigung 13', die maximale Änderungsrate 19, die Maximalbeschleunigung 18 und die resultierende Sollbeschleunigung 15" dargestellt. Im Bereich VI ist das Verhalten im Prinzip dasselbe wie das im Bereich III der Fig. 5. Die Sollbeschleunigung 15" wird mit der maximal möglichen Änderungsrate 19 erhöht, bis sie die Maximalbeschleunigung 18 erreicht. In diesem Beispiel ändert sich jedoch die Basissollbeschleunigung 13', sie beginnt zum Zeitpunkt 21, sich zu erhöhen. Da die Maximalbeschleunigung 18 unabhängig von der Basissollbeschleunigung 13' ist, verändert diese sich jedoch nicht. Die Differenz zwischen der Sollbeschleunigung 15" und der Basissollbeschleunigung 13' sinkt demnach. Damit jedoch grundsätzlich durch Betätigung des wenigstens einen Bedienelements 7 ein spürbarer Effekt erzielt wird, ist in diesem Ausführungsbeispiel ein Minimaldifferenzbetrag 23 vorgesehen, der einen minimal erlaubten Differenzbetrag zwischen der Basissollbeschleunigung 13' und der Sollbeschleunigung 15" angibt. Der Minimaldifferenzbetrag 23 wird zum Zeitpunkt 24 unterschritten. Das Fahrerassistenzsystem 6 ist nun dazu ausgebildet, in diesem Fall die Maximalbeschleunigung 18 zu ignorieren und die Sollbeschleunigung 15" so anzupassen, dass der Differenzbetrag immer mindestens dem Minimaldifferenzbetrag entspricht. Diese Anpassung ist im Bereich VII notwendig und erfolgt dort auch. Die Maximalbeschleunigung 18 wird überschritten, so dass immer mindestens der Minimaldifferenzbetrag zwischen der Basissollbeschleunigung 13' und der resultierenden Sollbeschleunigung 15" liegt. Dabei ist zu beachten, dass auch bei dieser Veränderung der Sollbeschleunigung die maximalen Änderungsraten 19 beachtet werden.

Nachdem die Basissollbeschleunigung wieder hinreichend abgefallen ist, Zeitpunkt 25, dass der Minimaldifferenzbetrag gesichert ist, beträgt die resultierende Sollbeschleunigung 15" wieder die Maximalbeschleunigung 18. Zum Zeitpunkt 17 liegt dann kein Signal mehr an, woraufhin die Sollbeschleunigung 15" mit der maximalen Änderungsrate 19 wieder bis auf die Basissollbeschleunigung 13' erniedrigt wird.

Wie bereits erwähnt, können die Zusatzbeschleunigung aus Fig. 4, die Maximalbeschleunigung und die maximalen Änderungsraten aus den Fig. 5 und 6 sowie auch der Minimaldifferenzbetrag aus Fig. 6 von weiteren Betriebsparametern des Kraftfahrzeugs 1 abhängig sein. Dies ist beispielhaft für die Maximalbeschleunigung 18 in Fig. 7 dargestellt. Der dort dargestellte Graph 26 zeigt die Abhängigkeit der Maximalbeschleunigung 18 von der Geschwindigkeit v. Wie zu erkennen ist, sinkt die Maximalbeschleunigung 18 in diesem Beispiel zu höheren Geschwindigkeiten hin ab.

Die maximalen Änderungsraten können sinnvollerweise davon abhängig sein, ob sich das Kraftfahrzeug 1 gerade in einem Beschleunigungszustand oder in einem Bremszustand befindet. Es sind jedoch für alle genannten, das Sollbeschleunigungsänderungsverhalten kennzeichnenden Parameter auch andere Abhängigkeiten von Betriebsparametern möglich und denkbar. So können diese Parameter auch oder zusätzlich von der Drehzahl, der eingelegten Fahrstufe, usw. abhängig gemacht werden.

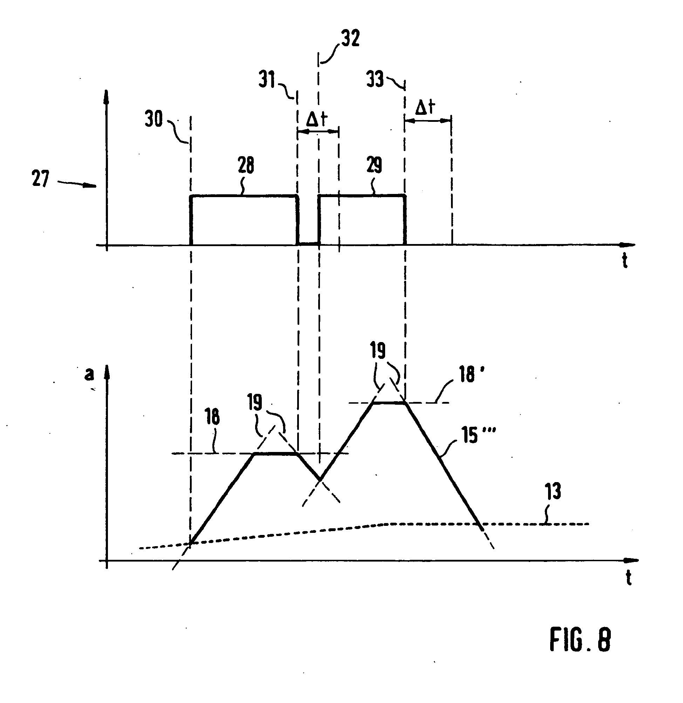

Es ist jedoch auch denkbar, dass das Sollbeschleunigungsänderungsverhalten durch einen Benutzereingriff, also eine Bedienfunktion, veränderbar ausgestaltet ist. Eine Möglichkeit zur Realisierung einer solchen Veränderung des Sollbeschleunigungsänderungsverhaltens mittels des Bedienelements 7 selber ist in Fig. 8 näher dargestellt. Im oberen Graphen 27 ist das Anliegen von Beschleunigungserhöhungssignalen 28, 29 gegen die Zeit t aufgetragen. Im unteren Graphen sind die Basissollbeschleunigungen 13 und die resultierende geänderte Sollbeschleunigung 15"' gegen die Zeit t aufgetragen. Bei Betätigung des Bedienelements 7 zum Zeitpunkt 30 wird wie üblich die Sollbeschleunigung mit der maximalen Änderungsrate 19 erhöht, bis die Maximalbeschleunigung 18 erreicht ist. Zum Zeitpunkt 31 endet die Betätigung des Bedienelements 7 und somit auch das Anliegen des Signals 28. Die Sollbeschleunigung 15"' sinkt entsprechend wieder mit der maximalen Änderungsrate 19 zur Erniedrigung der Sollbeschleunigung ab. Jedoch ist es innerhalb einer vorbestimmten Zeitdauer Δt , die zum Zeitpunkt 31 beginnt, möglich, durch eine erneute Betätigung des Bedienelements 7 zur Erzeugung eines Beschleunigungserhöhungssignals 29 ein weiteres Sollbeschleunigungsänderungsverhalten anzuwählen. Tatsächlich wird innerhalb des Zeitintervalls Δt zum Zeitpunkt 32 ein weiters Beschleunigungserhöhungssignal 29 erzeugt.

Das weitere Sollbeschleunigungsänderungsverhalten ist in diesem Beispiel durch eine Veränderung der Maximalbeschleunigung 18 zu einer Maximalbeschleunigung 18' gekennzeichnet. Dementsprechend wird nach dem Zeitpunkt 32 die Sollbeschleunigung 15"' mit der maximal möglichen Änderungsrate 19 bis zur Maximalbeschleunigung 18' erhöht. Endet die Betätigung des Bedienelements 7 und somit das Signal 29 zum Zeitpunkt 33, so wird die Sollbeschleunigung 15"' mit der maximal möglichen Änderungsrate 19 wieder bis auf die Basissollbeschleunigung 13 abgesenkt. Auch zum Zeitpunkt 33 beginnt wiederum die vorbestimmte Zeitdauer Δt zu laufen, innerhalb der in diesem Beispiel jedoch keine weitere Betätigung des Bedienelements 7 erfolgt. Wenn, wie in diesem Fall, schon ein weiteres, verändertes Sollbeschleunigungsänderungsverhalten angewählt ist, kann eine weitere Betätigung des Bedienelements 7 in der vorbestimmten Zeitdauer Δt verschiedene Auswirkungen haben. Zum einen ist es möglich, dass das veränderte Sollbeschleunigungsänderungsverhalten für die Zeit Δt weiterhin vorhanden ist und danach wieder das normale Sollbeschleunigungsänderungsverhalten mit der Maximalbeschleunigung 18 verfügbar ist. Es ist jedoch auch denkbar, den Vorgang zu iterieren, so dass bei Betätigung des Bedienelements 7 zur Erzeugung eines Beschleunigungserhöhungssignals innerhalb der Zeitdauer Δt nach dem Zeitpunkt 33 die Maximalbeschleunigung auf einen dritten Wert erhöht wird. Natürlich kann auch vorgesehen sein, dass bei Beendigung der Betätigung bei bereits veränderten Sollbeschleunigungsänderungsverhalten keine vorbestimmte Zeitdauer Δt bestimmt wird, sondern das Fahrerassistenzsystem einfach wieder auf das normale Sollbeschleunigungsänderungsverhalten zurückgeschaltet wird.

Die hier dargestellte Veränderung der Maximalbeschleunigung 18 zu der Maximalbeschleunigung 18' ist lediglich beispielhaft zu sehen. Prinzipiell können durch eine solche Bedienfunktion alle beliebigen oder gar alle Parameter, die das Sollbeschleunigungsänderungsverhalten kennzeichnen, veränderbar sein.

Es sei noch angemerkt, dass eine Betätigung des Gaspedals oder Bremspedals der Pedalerie 5 bei dem erfindungsgemäßen Kraftfahrzeug 1 jeweils Vorrang vor einer Betätigung des wenigstens einen Bedienelements 7 hat. Die Signale des wenigstens einen Bedienelements 7 werden bei Betätigung des Gas- oder Bremspedals von dem Fahrerassistenzsystem 6 ignoriert oder das Fahrerassistenzsystem 6 wird, beispielsweise bei Betätigung des Bremspedals, gänzlich deaktiviert.

Zum Abschluss sei noch erwähnt, dass in dem erfindungsgemäßen Kraftfahrzeug 1 auch eine Bremseinrichtung vorgesehen sein kann, die das Fahrzeug im Stillstand hält, wenn es durch das Fahrerassistenzsystem 6 in diesen Stillstand gebracht wurde. Dies kann automatisch im Rahmen eines Abstandshaltevorgangs notwendig sein, aber auch vom Benutzer durch Erniedrigung der Beschleunigung im Sinne einer negativen Beschleunigung derart, dass das Kraftfahrzeug 1 zum Stillstand kommt, initiiert sein. Dann wird das Fahrzeug durch die nicht näher dargestellte Bremseinrichtung automatisch im Stillstand gehalten.

## Patentansprüche

1. Kraftfahrzeug, umfassend ein die Geschwindigkeit des Kraftfahrzeugs regelndes Fahrerassistenzsystem (6) und einen Motor (2), wobei das Fahrerassistenzsystem (6) den Motor (2) und/oder ein Bremssystem 35 in Ahängigkeit von einer Sollbeschleunigung (15, 15', 15", 15"') ansteuert, wobei wenigstens ein mit dem Fahrerassistenzsystem (6) kommunizierendes Bedienelement (7, 7a, 7b) vorgesehen ist, durch das bei Betätigung wenigstens ein insbesondere digitales Signal erzeugbar ist, wobei während der Betätigung des Bedienelements (7, 7a, 7b) das Fahrerassistenzsystem (6) in Abhängigkeit des ihm von dem Bedienelement (7, 7a, 7b) übermittelten Signals zur Veränderung der Sollbeschleunigung (15, 15', 15", 15"') und zur Ansteuerung des Motors (2) und/oder des Bremssystems (35) in Abhängigkeit von der veränderten Sollbeschleunigung (15, 15', 15", 15"') ausgebildet ist,
**dadurch gekennzeichnet,**
**dass** das Fahrerassistenzsystem (6) zur Veränderung der Sollbeschleunigung (15, 15', 15", 15"') durch Addition bzw. Subtraktion einer von der Betätigungsdauer abhängigen Zusatzbeschleunigung (14) zu einer aufgrund der aktuellen Fahrsituation ermittelten Basissollbeschleunigung (13, 13') ausgebildet ist, und/oder dass das Fahrerassistenzsystem (6) bei Unterschreiten eines Minimaldifferenzbetrags (23) zwischen veränderter Sollbeschleunigung (15, 15', 15", 15"') und der oder einer aufgrund der aktuellen Fahrsituation ermittelten Basissollbeschleunigung (13, 13') bei anliegendem Signal zur Veränderung der Sollbeschleunigung (15, 15', 15", 15"') derart ausgebildet ist, dass der Differenzbetrag, gegebenenfalls unter Überschreitung einer Maximalbeschleunigung (18, 18'), mindestens dem Minimaldifferenzbetrag entspricht.

2. Kraftfahrzeug nach Anspruch 1,
**dadurch gekennzeichnet,**
**dass** mittels des wenigstens einen Bedienelements (7, 7a, 7b) ein Beschleunigungserhöhungssignal (11, 28, 29) und ein Beschleunigungserniedrigungssignal erzeugbar sind, wobei das Fahrerassistenzsystem (6) zum Erhöhen der Sollbeschleunigung (15, 15', 15", 15"') bei Anliegen eines Beschleunigungserhöhungssignals (11, 28, 29) und zum Erniedrigen der Sollbeschleunigung (15, 15', 15", 15"') bei Anliegen eines Beschleunigungserniedrigungssignals ausgebildet ist.

3. Kraftfahrzeug nach Anspruch 1 oder 2,
**dadurch gekennzeichnet,**
**dass** die Zusatzbeschleunigung (14) von weiteren Betriebsparametern des Kraftfahrzeugs (1), insbesondere der aktuellen Fahrzeuggeschwindigkeit (v) und/oder der aktuellen Drehzahl, abhängig ist.

4. Kraftfahrzeug nach einem der vorangehenden Ansprüche,
**dadurch gekennzeichnet,**
**dass** die Zusatzbeschleunigung (14) abhängig von der Betätigungsdauer insbesondere linear bis auf einen Maximalwert ansteigt und bei Beenden der Betätigung des Bedienelements (7, 7a, 7b) insbesondere linear auf Null abfällt.

5. Kraftfahrzeug nach einem der vorangehenden Ansprüche,
**dadurch gekennzeichnet,**
**dass** eine Maximalbeschleunigung (18, 18') vorgesehen ist, die durch die veränderte Sollbeschleunigung (15, 15', 15", 15"') nicht überschreitbar ist.

6. Kraftfahrzeug nach Anspruch 5,
**dadurch gekennzeichnet,**
**dass** die Maximalbeschleunigung (18, 18') von weiteren Betriebsparametern des Kraftfahrzeugs (1), insbesondere der aktuellen Fahrzeuggeschwindigkeit (v) und/oder der aktuellen Drehzahl, abhängig ist.

7. Kraftfahrzeug nach Anspruch 5 oder 6,
**dadurch gekennzeichnet,**
**dass** wenigstens eine maximale Änderungsrate (19), vorgesehen ist, wobei das Fahrerassistenzsystem (6) so ausgebildet ist, dass die Änderungsrate der Sollbeschleunigung (15, 15', 15", 15"') die maximale Änderungsrate (19) nicht überschreitet.

8. Kraftfahrzeug nach Anspruch 7,
**dadurch gekennzeichnet,**
**dass** die maximale Änderungsrate (19) von Betriebsparametern, insbesondere einem Betriebszustand des Kraftfahrzeugs (1), abhängig ist.

9. Kraftfahrzeug nach einem der vorangehenden Ansprüche,
**dadurch gekennzeichnet,**
**dass** eine Bedienfunktion zur Veränderung eines zuvor bestimmten Sollbeschleunigungsänderungsverhaltens vorgesehen ist.

10. Kraftfahrzeug nach Anspruch 9,
**dadurch gekennzeichnet,**
**dass** als die Bedienfunktion ein Beenden der Betätigung des Bedienelements (7, 7a, 7b) vorgesehen ist, wobei nach Beendigung der Betätigung für eine vorbestimmte Zeitdauer (Δt) bei erneuter Betätigung ein verändertes Sollbeschleunigungsänderungsverhalten anwählbar ist.

11. Kraftfahrzeug nach einem der vorangehenden Ansprüche,
**dadurch gekennzeichnet,**
**dass** das Fahrerassistenzsystem (6) zur Nichtberücksichtigung des Signals bei einem betätigten Gas- und/oder Bremspedal ausgebildet ist.

12. Kraftfahrzeug nach einem der vorangehenden Ansprüche,
**dadurch gekennzeichnet,**
**dass** mittels des einen Bedienelements (7) abhängig von der Art der Betätigung ein Beschleunigungserhöhungssignal (11, 28, 29) und ein Beschleunigungserniedrigungssignal erzeugbar ist.

13. Kraftfahrzeug nach einem der Ansprüche 1 bis 11,
**dadurch gekennzeichnet,**
**dass** zwei Bedienelemente (7a, 7b) vorgesehen sind, wobei über das erste Bedienelement (7a) ein Beschleunigungserhöhungssignal (11, 28, 29) und über das zweite Bedienelement (7b) ein Beschleunigungserniedrigungssignal erzeugbar ist.

14. Kraftfahrzeug nach Anspruch 13,
**dadurch gekennzeichnet,**
**dass** die Bedienelemente (7a, 7b) so ausgebildet sind, dass bei gleichzeitiger Betätigung der Bedienelemente (7a, 7b) nur ein Signal erzeugbar ist.

15. Kraftfahrzeug nach Anspruch 14,
**dadurch gekennzeichnet,**
**dass** bei gleichzeitiger Betätigung der Bedienelemente (7a, 7b) kein Signal erzeugbar ist oder das Fahrerassistenzsystem (6) bei gleichzeitigem Anliegen von zwei Signalen zum Ignorieren beider Signale ausgebildet ist.

16. Kraftfahrzeug nach einem der vorangehenden Ansprüche,
**dadurch gekennzeichnet,**
**dass** über das oder die Bedienelemente (7. 7a. 7b) wenigstens eine weitere Funktion des Fahrerassistenzsystems (6) anwählbar ist.

17. Kraftfahrzeug nach Anspruch 16,
**dadurch gekennzeichnet,**
**dass** das oder die durch Drücken bedienbaren Bedienelemente (7, 7a, 7b) über einen Widerstand von einer ersten Betätigungsposition (8a, 9a) weiter in Betätigungsrichtung in eine zweite Betätigungsposition (8b, 9b) drückbar sind, wobei jeweils eine Betätigungsposition (8a, 9a; 8b, 9b) der weiteren Funktion und eine Betätigungsposition (8b, 9b; 8a, 9a) der Erzeugung des Signals zugeordnet ist.

18. Kraftfahrzeug nach einem der vorangehenden Ansprüche,
**dadurch gekennzeichnet,**
**dass** das oder die Bedienelemente (7, 7a, 7b) zusätzlich einem weiteren Fahrzeugsystem zugeordnet sind

19. Kraftfahrzeug nach Anspruch 18,
**dadurch gekennzeichnet,**
**dass** die Bedienelemente (7, 7a, 7b) zwischen einem dem Fahrerassistenzsystem (6) und einem dem weiteren Fahrzeugsystem zugeordneten Bedienmodus umschaltbar sind.

20. Kraftfahrzeug nach Anspruch 19,
**dadurch gekennzeichnet,**
**dass** die Bedienelemente (7, 7a, 7b) zur Erzeugung der Signale nur bei aktivem Fahrerassistenzsystem (6) ausgebildet sind.

21. Kraftfahrzeug nach Anspruch 19 oder 20,
**dadurch gekennzeichnet,**
**dass** eine zur Anzeige des Bedienmodus ausgestaltete Anzeigevorrichtung vorgesehen ist.

22. Kraftfahrzeug nach einem der vorangehenden Ansprüche,
**dadurch gekennzeichnet,**
**dass** das oder die Bedienelemente (7, 7a, 7b) manuell betätigbar sind.

23. Kraftfahrzeug nach einem der vorangehenden Ansprüche,
**dadurch gekennzeichnet,**
**dass** das oder die Bedienelemente (7, 7a, 7b) an oder benachbart zu einem Lenkrad (4) angeordnet sind.

24. Kraftfahrzeug nach Anspruch 23,
**dadurch gekennzeichnet,**
**dass** das Bedienelement (7) ein am Lenkstock angeordneter Bedienhebel (7c) ist.

25. Kraftfahrzeug nach Anspruch 1 bis 21,
**dadurch gekennzeichnet,**
**dass** das Bedienelement (7) ein insbesondere im Bereich einer Mittelkonsole angeordneter Getriebewählhebel ist.

26. Kraftfahrzeug nach einem der vorangehenden Ansprüche,
**dadurch gekennzeichnet,**
**dass** eine automatische Bremseinrichtung zum Halten des durch das Fahrerassistenzsystem (6) oder durch Betätigung des oder eines Bedienelements (7, 7a, 7b) in den Stillstand gebrachten Kraftfahrzeugs (1) vorgesehen ist.

## Claims

1. Motor vehicle comprising a driver assistance system (6) regulating the speed of the motor vehicle, and an engine (2), wherein the driver assistance system (6) drives the engine (2) and/or a braking system (35) as a function of a required acceleration (15, 15', 15", 15"'), wherein at least one operational control (7, 7a, 7b) communicating with the driver assistance system (6) is provided which when actuated is able to generate at least one, in particular digital, signal, and wherein during actuation of the operational control (7, 7a, 7b) the driver assistance system (6) is configured to change the required acceleration (15, 15', 15", 15"') as a function of the signal transmitted to it by the operational control (7, 7a, 7b) and to drive the engine (2) and/or braking system (35) as a function of the changed required acceleration (15, 15', 15", 15"'),
**characterized in that**
the driver assistance system (6) is configured to change the required acceleration (15, 15', 15", 15"') by adding or subtracting an additional acceleration (14) dependent on the duration of actuation to [or from] a basic required acceleration (13, 13') determined on the basis of the current driving situation, and/or **in that** the driver assistance system (6) is configured so that if the difference between the changed required acceleration (15, 15', 15", 15"') and the or a basic required acceleration (13, 13') falls below a minimum amount (23) while the signal to change the required acceleration (15, 15', 15", 15"') is active, the amount of the difference remains at least equal to the minimum amount even if this causes a maximum acceleration (18, 18') to be exceeded.

2. Motor vehicle according to Claim 1,
**characterized in that**
an acceleration-boosting signal (11, 28, 29) and an acceleration-reducing signal are generatable by means of the at least one operational control (7, 7a, 7b), the driver assistance system (6) being configured to increase the required acceleration (15, 15', 15", 15"') when an acceleration-boosting signal (11, 28, 29) is applied and to lower the required acceleration (15, 15', 15", 15"') when an acceleration-reducing signal is applied.

3. Motor vehicle according to Claim 1 or Claim 2,
**characterized in that**
the additional acceleration (14) is a function of other operational parameters of the motor vehicle (1), in particular the vehicle's current road speed (v) and/or engine speed.

4. Motor vehicle according to any one of the preceding claims,
**characterized in that**
the additional acceleration (14) increases, in particular linearly, to a maximum value as a function of the duration of actuation, and falls, in particular linearly, to zero upon cessation of actuation of the operational control (7, 7a, 7b).

5. Motor vehicle according to any one of the preceding claims,
**characterized in that**
a maximum acceleration (18, 18') which cannot be exceeded by the changed required acceleration (15, 15', 15", 15"') is provided.

6. Motor vehicle according to Claim 5,
**characterized in that**
the maximum acceleration (18, 18') is a function of other operational parameters of the motor vehicle (1), in particular the vehicle's current road speed (v) and/or engine speed.

7. Motor vehicle according to Claim 5 or Claim 6,
**characterized in that**
at least one maximum rate of change (19) is provided, the driver assistance system (6) being configured so that the rate of change of the required acceleration (15, 15', 15", 15"') does not exceed the maximum rate of change (19).

8. Motor vehicle according to Claim 7,
**characterized in that**
the maximum rate of change (19) is a function of operational parameters, in particular an operational condition of the motor vehicle (1).

9. Motor vehicle according to any one of the preceding claims,
**characterized in that**
a control function for altering a previously specified required-acceleration change behaviour is provided.

10. Motor vehicle according to Claim 9,
**characterized in that**
a cessation of actuation of the operational control (7, 7a, 7b) is provided as the control function, an altered required-acceleration change behaviour being selectable upon renewed actuation after actuation has ceased for a predetermined time (*Delta* t).

11. Motor vehicle according to any one of the preceding claims,
**characterized in that**
the driver assistance system (6) is configured to disregard the signal when an accelerator and/or brake pedal is actuated.

12. Motor vehicle according to any one of the preceding claims,
**characterized in that**
an acceleration-boosting signal (11, 28, 29) and an acceleration-reducing signal [are] generatable by means of one operational control (7) depending on the nature of the actuation.

13. Motor vehicle according to any one of Claims 1 to 11,
**characterized in that**
two operational controls (7a, 7b) are provided, an acceleration-boosting signal (11, 28, 29) being generatable by means of the first operational control (7a) and an acceleration-reducing signal being generatable by means of the second operational control (7b).

14. Motor vehicle according to Claim 13,
**characterized in that**
the operational controls (7a, 7b) are configured so that only one signal can be generated when the operational controls (7a, 7b) are actuated simultaneously.

15. Motor vehicle according to Claim 14 [*sic*],
**characterized in that**
when the operational controls (7a, 7b) are actuated simultaneously, no signal can be generated, or the driver assistance system (6) is configured to disregard both signals when two signals are applied simultaneously.

16. Motor vehicle according to any one of the preceding claims,
**characterized in that**
at least one further function of the driver assistance system (6) is selectable by means of the operational control or controls (7, 7a, 7b).

17. Motor vehicle according to Claim 16,
**characterized in that**
the operational control or controls (7, 7a, 7b) [is or] are operable by pressing and can be pressed further in the actuating direction beyond a resistance from a first actuating position (8a, 9a) into a second actuating position (8b, 9b), one actuating position (8a, 9a; 8b, 9b) in each case being assigned to the further function, and one actuating position (8b, 9b; 8a, 9a) in each case being assigned to generation of the signal.

18. Motor vehicle according to any one of the preceding claims,
**characterized in that**
the operational control or controls (7, 7a, 7b) [is or] are additionally assigned to another vehicle system.

19. Motor vehicle according to Claim 18,
**characterized in that**
the operational controls (7, 7a, 7b) are switchable between an operating mode assigned to the driver assistance system (6) and an operating mode assigned to the other vehicle system.

20. Motor vehicle according to Claim 19,
**characterized in that**
the operational controls (7, 7a, 7b) are configured to generate signals only when the driver assistance system (6) is active.

21. Motor vehicle according to Claim 19 or Claim 20,
**characterized in that**
a display device configured to display the operating mode is provided.

22. Motor vehicle according to any one of the preceding claims,
**characterized in that**
the operational control or controls (7, 7a, 7b) [is or] are manually operable.

23. Motor vehicle according to any one of the preceding claims,
**characterized in that**
the operational control or controls (7, 7a, 7b) [is or] are located on or adjacent to a steering wheel (4).

24. Motor vehicle according to Claim 23,
**characterized in that**
the operational control (7) is a control lever (7c) located on the steering column.

25. Motor vehicle according to Claims 1 to 21,
**characterized in that**
the operational control (7) is a gear selector lever located in particular in the region of a centre console.

26. Motor vehicle according to any one of the preceding claims,
**characterized in that**
an automatic braking device is provided to halt the motor vehicle (1) when it has been brought to a stop by the driver assistance system (6) or by actuation of the or an operational control (7, 7a, 7b).

## Revendications

1. Véhicule automobile comportant un système d'assistance au conducteur (6) régulant la vitesse du véhicule automobile et un moteur (2), dans lequel le système d'assistance au conducteur (6) commande le moteur (2) et/ou un système de freinage (35) en fonction d'une accélération de consigne (15, 15', 15", 15"'), dans lequel au moins un élément de commande (7, 7a, 7b) communiquant avec le système d'assistance au conducteur (6) est prévu, lequel permet de générer lors de l'actionnement, au moins un signal en particulier numérique, dans lequel pendant l'actionnement de l'élément de commande (7, 7a, 7b), le système d'assistance au conducteur (6) est réalisé en fonction du signal transmis par l'élément de commande (7, 7a, 7b) pour la modification de l'accélération de consigne (15, 15', 15", 15''') et pour la commande du moteur (2) et/ou du système de freinage (35) en fonction de l'accélération de consigne (15, 15', 15" , 15"') modifiée,
**caractérisé en ce que**
le système d'assistance au conducteur (6) est réalisé pour la modification de l'accélération de consigne (15, 15', 15" , 15"') par addition ou soustraction d'une accélération supplémentaire (14) dépendant de la durée d'actionnement à une accélération de consigne de base (13, 13') déterminée en raison de la situation de conduite actuelle, et/ou **en ce que** le système d'assistance au conducteur (6) est réalisé en cas de passage sous une valeur différentielle minimale (23) entre l'accélération de consigne (15, 15', 15", 15''') modifiée et l'accélération de consigne de base (13, 13') déterminée en raison de la situation de conduite actuelle lorsque le signal se produit pour la modification de l'accélération de consigne (15, 15', 15", 15"') de sorte que la valeur différentielle corresponde éventuellement en cas de dépassement d'une accélération maximale (18, 18') au moins à la valeur différentielle minimale.

2. Véhicule automobile selon la revendication 1,
**caractérisé en ce que**
au moyen de l'au moins un élément de commande (7, 7a, 7b) peuvent être générés un signal d'augmentation de l'accélération (11, 28, 29) et un signal de réduction de l'accélération, le système d'assistance au conducteur (6) étant réalisé pour l'augmentation de l'accélération de consigne (15, 15', 15", 15"') lorsqu'un signal d'augmentation de l'accélération (11, 28, 29) se produit et pour la réduction de l'accélération de consigne (15, 15', 15", 15''') lorsqu'un signal de réduction de l'accélération se produit.

3. Véhicule automobile selon la revendication 1 ou 2,
**caractérisé en ce que**
l'accélération supplémentaire (14) dépend d'autres paramètres de fonctionnement du véhicule automobile (1), en particulier de la vitesse du véhicule (v) actuelle et/ou du régime actuel.

4. Véhicule automobile selon l'une des revendications 1 à 3,
**caractérisé en ce que**
l'accélération supplémentaire (14) augmente selon la durée d'actionnement en particulier linéairement jusqu'à une valeur maximale et diminue à la fin de l'actionnement de l'élément de commande (7a, 7a, 7b) en particulier linéairement jusqu'à zéro.

5. Véhicule automobile selon l'une des revendications 1 à 4,
**caractérisé en ce que**
une accélération maximale (18, 18') est prévue, laquelle ne peut pas être dépassée par l'accélération de consigne (15, 15', 15'', 15''') modifiée.

6. Véhicule automobile selon la revendication 5,
**caractérisé en ce que**
l'accélération maximale (18, 18') dépend d'autres paramètres de fonctionnement du véhicule automobile (1) en particulier de la vitesse du véhicule (v) actuelle et/ou du régime actuel.

7. Véhicule automobile selon la revendication 5 ou 6,
**caractérisé en ce que**
au moins une vitesse de modification (19) maximale est prévue, le système d'assistance au conducteur (6) étant réalisé de sorte que la vitesse de modification de l'accélération de consigne (15, 15', 15", 15"') ne dépasse pas la vitesse de modification (19) maximale.

8. Véhicule automobile selon la revendication 7,
**caractérisé en ce que**
la vitesse de modification (19) maximale dépend de paramètres de fonctionnement, en particulier d'un état de fonctionnement du véhicule automobile (1).

9. Véhicule automobile selon l'une des revendications 1 à 8,
**caractérisé en ce que**
une fonction de commande est prévue pour la modification d'un comportement de modification d'accélération de consigne déterminé auparavant.

10. Véhicule automobile selon la revendication 9,
**caractérisé en ce que**
une fin de l'actionnement de l'élément de commande (7, 7a, 7b) est prévue comme fonction de commande, à la fin de l'actionnement pour une durée (Δt) prédéterminée, un comportement de modification d'accélération de consigne modifié pouvant être choisi lors d'un nouvel actionnement.

11. Véhicule automobile selon l'une des revendications 1 à 10,
**caractérisé en ce que**
le système d'assistance au conducteur (6) est réalisé pour la non prise en compte du signal lorsqu'une pédale de frein et/ou d'accélérateur est actionnée.

12. Véhicule automobile selon l'une des revendications 1 à 11,
**caractérisé en ce que**
un signal d'augmentation de l'accélération (11, 28, 29) et un signal de réduction de l'accélération peuvent être générés au moyen de l'un élément de commande (7) selon le type d'actionnement.

13. Véhicule automobile selon l'une des revendications 1 à 12,
**caractérisé en ce que**
deux éléments de commande (7a, 7b) sont prévus, par le biais du premier élément de commande (7a), un signal d'augmentation de l'accélération (11, 28, 29) et par le biais du second élément de commande (7b), un signal de réduction de l'accélération pouvant être générés.

14. Véhicule automobile selon la revendication 13,
**caractérisé en ce que**
les éléments de commande (7a, b) sont réalisés de sorte que lors de l'actionnement simultané des éléments de commande (7a, 7b), un seul signal puisse être généré.

15. Véhicule automobile selon la revendication 14,
**caractérisé en ce que**
lors de l'actionnement simultané des éléments de commande (7a, 7b), aucun signal ne peut être généré ou le système d'assistance au conducteur (6) est réalisé lors de la production simultanée de deux signaux pour l'ignorance des deux signaux.

16. Véhicule automobile selon l'une des revendications 1 à 15,
**caractérisé en ce que**
au moins une autre fonction du système d'assistance au conducteur (6) peut être choisie par le ou les éléments de commande (7, 7a, 7b).

17. Véhicule automobile selon la revendication 16,
**caractérisé en ce que**
le ou les éléments de commande (7, 7a, 7b) pouvant être manoeuvrés par pression peuvent être pressés par le biais d'une résistance d'une première position d'actionnement (8a, 9a) encore dans le sens d'actionnement dans une seconde position d'actionnement (8b, 9b), respectivement une position d'actionnement (8a, 9a ; 8b, 9b) étant associée à l'autre fonction et une position d'actionnement (8b, 9b ; 8a, 9a) à la génération du signal.

18. Véhicule automobile selon l'une des revendications 1 à 17,
**caractérisé en ce que**
le ou les éléments de commande (7, 7a, 7b) sont associés en outre à un autre système du véhicule.

19. Véhicule automobile selon la revendication 18,
**caractérisé en ce que**
les éléments de commande (7, 7a, 7b) peuvent être commutés entre un mode de fonctionnement associé au système d'assistance au conducteur (6) et un mode de fonctionnement associé à l'autre système de véhicule.

20. Véhicule automobile selon la revendication 19,
**caractérisé en ce que**
les éléments de commande (7, 7a, 7b) sont réalisés pour la génération des signaux seulement en cas de système d'assistance au conducteur (6) activé.

21. Véhicule automobile selon la revendication 19 ou 20,
**caractérisé en ce que**
un dispositif d'affichage configuré pour l'affichage du mode de commande est prévu.

22. Véhicule automobile selon l'une des revendications 1 à 21,
**caractérisé en ce que**
le ou les éléments de commande (7, 7a, 7b) sont actionnables manuellement.

23. Véhicule automobile selon l'une des revendications 1 à 22,
**caractérisé en ce que**
le ou les éléments de commande (7, 7a, 7b) sont disposés sur ou de manière contiguë à un volant de direction (4).

24. Véhicule automobile selon la revendication 23,
**caractérisé en ce que**
l'élément de commande (7) est un levier de commande (7c) disposé sur la colonne de direction.

25. Véhicule automobile selon la revendication 1 à 21,
**caractérisé en ce que**
l'élément de commande (7) est un levier de vitesses disposé en particulier dans la zone d'une console centrale.

26. Véhicule automobile selon l'une des revendications 1 à 25,
**caractérisé en ce que**
un dispositif de freinage automatique est prévu pour maintenir le véhicule automobile (1) amené à l'arrêt par le système d'assistance au conducteur (6) ou par l'actionnement de l'élément de commande ou d'un élément de commande (7, 7a, 7b).
